# EUROPÄISCHE PATENTSCHRIFT

(11) **EP 2 927 015 B1**
(45) Veröffentlichungstag und Bekanntmachung des Hinweises auf die Patenterteilung: **10.04.2019**
(21) Anmeldenummer: 15405010.8
(22) Anmeldetag: 06.02.2015
(51) Int. Cl.: B44C 1/22, B27J 5/00, B44C 5/04, E04F 15/00

(54) **Verfahren zur Bearbeitung einer Nutzoberfläche eines Korkbodenbelags**
Method for processing a surface of a cork floor covering
Procédé de traitement d'une surface d'un revêtement de sol en liège

(30) Priorität: 31.03.2014 CH 4832014
(43) Veröffentlichungstag der Anmeldung: 07.10.2015
(73) Patentinhaber: Proverum AG, 6341 Baar (CH)
(72) Erfinder: Mühlebach, Moritz, 8305 Dietlikon (CH)
(74) Vertreter: Keller & Partner Patentanwälte AG

(56) Entgegenhaltungen:
- EP-A2- 0 442 863
- EP-A2- 1 990 186
- DE-A1- 10 130 463
- DE-A1-102010 020 962
- DE-U1-202008 018 382
- US-B1- 8 171 691

## Beschreibung

### Technisches Gebiet

Die Erfindung betrifft ein Verfahren zur Bearbeitung einer Nutzoberfläche eines Bodenbelags. Sie betrifft weiter einen Bodenbelag, welcher durch ein solches Verfahren herstellbar ist.

### Stand der Technik

Bodenbeläge mit einer Nutzoberfläche aus Korkmaterial sind seit längerem bekannt. Sie umfassen häufig Korkbodenplatten, welche nebst der Nutzoberfläche aus Kork einen im Wesentlichen formstabilen Unterbau aufweisen, welcher mit Nut- bzw. Federelementen versehen ist, so dass sich die Korkbodenplatten einfach zu einem Korkboden zusammensetzen lassen. Ferner sind auch Böden bekannt, bei welchen die Korkbodenplatten direkt auf den Untergrund verklebt werden.

Zur Herstellung der Nutzoberfläche wird zunächst ein flächiges Korkmaterial hergestellt. Dazu wird Kork, z. B. Reste aus der Flaschenkorken-Herstellung, zu einem Granulat zermahlen und anschliessend zusammen mit einem Klebstoff unter Hitze verpresst. Aus den entstehenden Materialblöcken werden durch Abschälen Korkschichten der gewünschten Dicke erzeugt. Sie können dann miteinander bzw. mit Schichten aus anderen Materialien zu einem mehrschichtigen Bodenbelag verbunden werden.

Korkböden fühlen sich aufgrund der geringen Wärmeleitfähigkeit des Korkmaterials stets warm an und bieten aufgrund ihrer Elastizität einen guten Trittkomfort. Die Optik eines herkömmlichen Korkbodens ist allerdings aufgrund des verwendeten Materials weitgehend vorgegeben und vermag nicht alle Ansprüche zu befriedigen.

Es wurde deshalb bereits vorgeschlagen, Korkbodenplatten zu bedrucken. So schlägt die EP 1 990 186 A2 (E. Lingg) vor, eine hochverdichtete Korkauflage zunächst bei mindestens 150 °C zu tempern, diese dann mit einer Dämmschicht und einer HDF-Trägerplatte zu verkleben und zu verpressen, die Oberfläche zu schleifen und zu grundieren, dann im Digitaldruckverfahren einen UV-härtenden Lack auf Wasserbasis aufzutragen und schliesslich mindestens zwei Versiegelungsschichten aufzubringen. So wird es ermöglicht, dass die Korkbodenplatten eine andere Optik aufweisen können, z. B. diejenige einer Holz- oder Steinfläche.

Die DE 20 2008 018 382 U1 (Schulte) beschreibt ein Verfahren zur Herstellung strukturierter und bedruckter Korkbodenplatten. Gängig sind, laut diesem Gebrauchsmuster, Kork-Fussbodendielen mit einer Trägerplatte, die profilierte Flügelflächen aufweist. Die oberseitige Korkschicht der dort beanspruchten Bodenplatten weist eine geprägte Oberflächenstruktur auf und hat vorzugsweise eine Dicke von mindestens 2 mm. Die Korkschicht wird vor dem Prägen der Oberfläche bedruckt. Der Auftrag des Druckdekors wird auf die geprägte Oberflächenstruktur abgestimmt, so dass die Prägung synchron zu dem aufgedruckten Dekor erscheint. Die Korkschicht kann mit einer Versiegelung versehen sein.

Die DE 10 130 463 A1 (Korbena) beschreibt eine Methode, wie Korkplatten auf einfache Art mit einem Fugenmuster versehen werden können. Die Fugen werden dabei mit einem oder mehreren Sägeblättern eingefräst. Die Ränder der Platte können ebenfalls abgeschrägt werden. Die Korkplatten der DE 10 103 463 können auf einer Faserplatte mit einer Nut- und Federverbindung angebracht werden.

Bedruckte Korkböden sind im Handel erhältlich. Die Druckqualität ist beachtlich, aufgrund der glatten Oberfläche der geschliffenen Korkschicht hat die Oberfläche aber keine Anmutung, die derjenigen eines natürlichen Materials, z. B. aus einem entsprechenden Holz- oder Steinmaterial, entspricht. Z. T. wird dieses Problem angegangen, indem dicke, strukturierte Lackschichten auf die Nutzoberfläche aufgebracht werden, wobei Lacke mit unterschiedlicher Konsistenz und unterschiedlichem Glanz zum Einsatz gelangen. Eine andere Technik sieht die nachträgliche Bearbeitung einer Lackschicht vor, indem beispielsweise eine erwärmte, strukturierte Walze auf die Lackschicht einwirkt. Auch so lässt sich aber nicht jede gewünschte optische Anmutung erreichen, besonders weil die Tiefe der damit erreichbaren Strukturen sehr begrenzt ist. Ferner ist die Dauerhaftigkeit der derart erzeugten Strukturierung fraglich, und die Verfahren sind aufwendig.

### Darstellung der Erfindung

Aufgabe der Erfindung ist es, ein dem eingangs genannten technischen Gebiet zugehörendes Verfahren zur Bearbeitung einer Nutzoberfläche eines Bodenbelags zu schaffen, welches erweiterte Möglichkeiten für die Beeinflussung der optischen Anmutung von Korkböden schafft.

Die Lösung der Aufgabe ist durch die Merkmale des Anspruchs 1 definiert. Gemäss der Erfindung umfasst das Verfahren folgende Schritte:
a) Einbringen von Strukturen in ein flächiges Korkmaterial durch ein materialabtragendes Verfahren;
b) Bedrucken des strukturierten Korkmaterials durch ein Digitaldruckverfahren; und
c) Aufbringen einer Schutzschicht auf das bedruckte strukturierte Korkmaterial.

Beim verwendeten Korkmaterial handelt es sich in einer bevorzugten Ausführungsform um ein Material, welches im Wesentlichen ausschliesslich aus Kork und Klebstoff zusammengesetzt ist. In anderen Ausführungsformen kann das Korkmaterial weitere Komponenten umfassen, es kann sich z. B. um Linoleum mit Korkanteil oder ein so genanntes Korklinoleum mit erhöhtem Korkanteil handeln, welche nebst Kork Komponenten wie Leinöl, Naturharze, Holzmehl, Pigmente, Jute und/oder Kalkstein umfassen.

Bei der Schutzschicht handelt es sich insbesondere um eine Versiegelungsschicht bzw. eine Lackierung, z. B. mit einem Lack auf Wasserbasis, welcher Polyurethan- und/oder Acrylanteile aufweist. Die Schutzschicht kann insbesondere auch zwei oder mehr Schichten aus gleichen oder unterschiedlichen Materialien umfassen. Sie hat die Aufgabe, die Druckschicht und das flächige Korkmaterial vor schädlichen Einflüssen zu schützen und kann auch zu einer gewünschten Optik der Oberfläche des Bodenbelags beitragen.

Bevorzugt erfolgt das Bedrucken mittels eines Tintenstrahl-Druckverfahrens. Als berührungsloses Druckverfahren ist es besonders gut zum Bedrucken der mit der Oberflächenstruktur versehenen Oberfläche geeignet. Es lässt sich zudem kostengünstig und grossflächig einsetzen, wobei der Art der zu erzeugenden Bedruckung kaum Grenzen gesetzt sind. Als Druckfarbe geeignet sind beispielsweise UV-aushärtende Tinten auf Farbstoff- und/oder Pigmentbasis.

Durch das erfindungsgemässe Verfahren lässt sich die Optik des Produkts in vielerlei Weise beeinflussen. Der optische Eindruck kann sich wesentlich von demjenigen einer glatten, bedruckten Oberfläche unterscheiden. Insbesondere können durch die Kombination von Strukturierung und Digitaldruck Oberflächen geschaffen werden, welche die Anmutung eines ungeschliffenen natürlichen Materials (z. B. Holz, Schiefer o. ä.) aufweisen. Die Erfindung ist aber nicht auf derartige Oberflächen eingeschränkt, sie ist auch zur Herstellung von Bodenbelägen geeignet, welche nicht die Anmutung eines natürlichen Materials haben sollen.

Durch das erfindungsgemässe Verfahren ist also ein Bodenbelag herstellbar, welcher folgendes umfasst
a) eine Nutzoberfläche aus einem flächigen Korkmaterial, wobei die Nutzoberfläche mit durch ein materialabtragendes Verfahren erzeugten Strukturen versehen ist;
b) eine auf die strukturierte Nutzoberfläche aufgebrachte Druckschicht; und
c) eine auf die Druckschicht aufgebrachte Schutzschicht.

Mit Vorteil beträgt eine Dicke des flächigen Korkmaterials 1 - 5, bevorzugt 2 - 4 mm. Für Nutzflächen eines Bodenbelags geeigneter Kork mit solchen Dicken ist allgemein verfügbar.

Der Bodenbelag umfasst mit Vorteil weiter eine formstabile Schicht, auf welche die Nutzoberfläche aufgebracht ist. Bei der formstabilen Schicht handelt es sich insbesondere um eine hochdichte Faserplatte (HDF). Die Nutzoberfläche kann direkt auf die formstabile Schicht aufgebracht sein oder es können Zwischenschichten vorhanden sein. Ein bevorzugter Aufbau des Bodenbelags umfasst beispielsweise von unten nach oben eine Korkunterlage mit einer Dicke von 1 - 2 mm und einer antibakteriellen Schicht; diese Unterlage dient primär zur Trittschalldämmung. Als nächstes folgt eine hochdichte Faserplatte mit einer Dicke von 7-10 mm, dann das flächige Korkmaterial, welches die Nutzoberfläche bildet (z. B. mit einer Dicke von 3 mm, dann die Druckschicht und schliesslich die Schutzschicht. Andere Schichtaufbauten basieren auf mehreren miteinander verklebten Korkschichten.

Als Alternative zu einem Schichtaufbau kann die Erfindung auch im Zusammenhang mit Korkpaneelen angewandt werden, die selbst eine gewisse Formstabilität aufweisen, z. B. eine Dicke von 5 mm oder mehr haben, und die als solche vollflächig verklebt werden.

Bei einer bevorzugten Ausführungsform der Erfindung umfasst der Bodenbelag mehrere Platten, wobei die formstabile Schicht in Randbereichen der Platten miteinander zusammenwirkende Befestigungselemente umfasst. Bei den Befestigungselementen handelt es sich insbesondere um Nuten und Federn, welche eine Befestigung benachbarter Platten durch eine so genannte Klick-Verbindung ermöglichen. Entsprechende Geometrien sind insbesondere von Laminat-Fussböden seit längerem bekannt.

Bevorzugt umfassen die Strukturen Strukturelemente mit einer Tiefe von 0.05 - 2.0 mm. Derartige Strukturen schaffen den gewünschten optischen Effekt, haben weder negative Einflüsse auf die Nutzeigenschaften der Bodenbelagsoberfläche noch auf die Bedruckbarkeit. Besonders bevorzugt sind Strukturen mit einer Tiefe von 0.1-0.5 mm. Die Strukturen können insbesondere ausschliesslich aus solchen Strukturelementen gebildet sein. Es ist aber auch möglich, dass zusätzlich weitere Elemente vorhanden sind, insbesondere solche geringerer Tiefe.

Bevorzugt umfassen die Strukturen längliche Strukturelemente mit einer Breite von 1 - 30 mm. Als längliches Strukturelement wird hier ein Element verstanden, dessen Form eine im Wesentlichen lineare Hauptausdehnung umfasst, wobei eine Länge (entlang dieser Hauptausdehnung) deutlich grösser ist als eine Breite quer zur Hauptausdehnung, beispielsweise mindestens das 6-fache beträgt. Strukturelemente mit Breiten von 1 - 30 mm lassen sich verhältnismässig einfach erzeugen, z. B. durch Fräs, Schleif- oder Hobelvorgänge, sie entsprechen Strukturen, wie sie bei natürlichen Materialien (z. B. Holz, Gestein) oft vorkommen und sie schaffen einen optischen Eindruck, welcher sich klar von demjenigen einer lediglich bedruckten, ansonsten aber glatten Oberfläche unterscheidet.

Die Strukturen können weitere oder andere Strukturelemente aufweisen. Letztlich hängen die Dimensionen vom verwendeten Strukturierungsverfahren und der gewünschten optischen Anmutung ab.

Dabei wirkt das materialabtragende Verfahren mit Vorteil nur bereichsweise auf das flächige Korkmaterial ein, d. h. ein anderer Teil der Nutzoberfläche entspricht der ursprünglichen, im Wesentlichen ebenen Oberfläche des Korkmaterials. Der Abtrag erfolgt bereichsweise oder gar nur punktuell. Dadurch vereinfacht sich die materialabtragende Bearbeitung des Korkmaterials, der Dickenverlust ist minimal, und es wird eine Oberfläche erreicht, welche einer ebenen Fläche mit eingebrachten Vertiefungen entspricht. Dies ist grob bearbeiteten Holzoberflächen sehr ähnlich.

Alternativ wird die gesamte Oberfläche durch das materialabtragende Verfahren bearbeitet, wobei sich die Strukturen dadurch ergeben, dass die Bearbeitung an verschiedenen Stellen auf unterschiedliche Weise erfolgt.

Bei ersten Ausführungsformen des erfindungsgemässen Verfahrens wird beim Bedrucken ein auf die eingebrachten Strukturen ausgerichtetes Druckmuster erzeugt. Dies schafft verschiedene Möglichkeiten: So kann zum einen das Druckbild so gewählt werden, dass sich der optische Eindruck der Strukturierung und der Bedruckung gegenseitig verstärkt, z. B. indem eine Holzmaserung zunächst strukturiert und dann auch farblich hervorgehoben wird. Die Strukturierung und das Druckmuster können sich auch insofern ergänzen, als strukturierte Bereiche nicht oder anders bedruckt werden als nicht strukturierte Bereiche. Beispielsweise kann die Anmutung einer gefliesten Oberfläche erreicht werden, wenn im Rahmen der Strukturierung den Fugen entsprechende trogartige Vertiefungen eingebracht werden und wenn im Rahmen der Bedruckung die (unstrukturierten oder anders strukturierten) Flächen zwischen den Vertiefungen mit einem Fliesenmuster bedruckt werden.

Die Strukturierung und das Druckmuster können bereits vor der Herstellung des Bodenbelags fest vorgegeben sein. Beim Bedrucken wird dann lediglich darauf geachtet, dass das Druckmuster korrekt auf die Strukturierung ausgerichtet ist. In einer Variante wird das Druckmuster erst erzeugt, nachdem die Strukturierung geschaffen wurde, insbesondere indem die erzeugte Strukturierung erfasst wird, z. B. optisch und/oder mechanisch, und in Abhängigkeit von den erfassten Daten die Druckdaten erzeugt oder modifiziert werden.

Bei zweiten Ausführungsformen des erfindungsgemässen Verfahrens wird beim Bedrucken ein von den eingebrachten Strukturen unabhängiges Druckmuster erzeugt.

So lässt sich beispielsweise eine Oberflächenstruktur erzeugen, die der Struktur einer natürlichen Oberfläche entspricht, während durch das Bedrucken auch die Farben der natürlichen Oberfläche reproduziert werden. Ferner lässt sich mit der Strukturierung eine gewünschte Textur erreichen, wonach beispielsweise geometrische. Muster oder Schriftzüge auf die Oberfläche aufgedruckt werden.

Bevorzugt erfolgt das materialabtragende Verfahren CNC-gesteuert. Dies ermöglicht einen flexiblen Materialabtrag mit minimalen Umstellzeiten. Es ist auch möglich, ein Zufallselement in die CNC-Steuerung einzubauen, so dass sich jede erzeugte Strukturierung von jeder anderen unterscheidet.

Beim materialabtragenden Verfahren handelt es sich bevorzugt um ein Fräs-, Schleif- oder Hobelverfahren. Es hat sich gezeigt, dass sich derartige Verfahren auf ein flächiges, Korkmaterial anwenden lassen. Ferner ermöglichen sie eine gezielte Steuerung der Erzeugung der gewünschten Strukturen. Die Materialzusammensetzung und Herstellungsparameter des Korkmaterials (Korngrössen des Korkgranulats, Kunststoffanteil, Pressdruck und Temperatur) sind gegebenenfalls an das verwendete materialabtragende Verfahren anzupassen.

Es sind auch weitere Verfahren möglich, z. B. mittels Drahtbürsten, die mit gleichbleibendem oder wechselndem Druck auf das flächige Korkmaterial einwirken.

In einer vorteilhaften Variante des erfindungsgemässen Verfahrens wird beim Aufbringen der Schutzschicht oder in einem nachfolgenden Schritt eine Lackschicht aufgebracht und strukturiert. Die Strukturierung kann dabei während des Auftragens erfolgen, insbesondere indem der Auftrag über die Fläche ungleichmässig erfolgt. Sie kann auch in einem nachfolgenden Schritt vorgenommen werden, entweder indem die noch nicht angetrocknete, verformbare Schicht strukturiert wird, z. B. mittels einer profilierten Walze, oder indem die bereits angetrocknete Schicht verformbar gemacht wird, z. B. durch temporäres Erhitzen, wobei auch hier eine profilierte Walze einsetzbar ist. Bei der letztgenannten Variante umfasst die Walze mit Vorteil eine Heizeinrichtung, so dass das Erwärmen und Strukturieren in einem Arbeitsgang erfolgen kann.

Die Strukturierung der Korkschicht kann so durch die Strukturierung der Lackschicht ergänzt werden, z. B. auf zwei verschiedenen Grössenskalen (was die Tiefe der Strukturen und gegebenenfalls auch die flächige Ausdehnung der Strukturen betrifft). Die Optik des Bodenbelags aber gegebenenfalls auch seine Nutzeigenschaften lassen sich so in noch grösserem Mass beeinflussen.

Bei einer bevorzugten Ausführungsform umfassen die Strukturen in der Nutzoberfläche gerade, längliche, trogartige Strukturen in einer regelmässigen Anordnung, wobei die Anordnung so gewählt ist, dass die Randbereiche der Platten zumindest teilweise, bevorzugt überall entlang der trogartigen Strukturen verlaufen. Dies hat zur Folge, dass die Übergänge zwischen benachbarten Platten praktisch nicht sichtbar sind, weil sie in die regelmässige Anordnung der trogartigen Strukturen integriert sind und weil die allenfalls sichtbare Fuge gegenüber der Oberfläche des Bodenbelags zurückversetzt ist. Besonders bevorzugt ist diese Ausführung bei Platten, die sich mittels einer Klickverbindung aneinander fügen lassen. Die regelmässige Anordnung der trogartigen Strukturen kann beispielsweise eine geflieste Oberfläche simulieren, wobei die trogartigen Strukturen den Fugen zwischen den Fliesen entsprechen. Besonders bevorzugt sind die Platte und die Strukturen so dimensioniert, dass mehrere der trogartigen Strukturen, welche Fugen zwischen den Fliesen entsprechen, die Platte durchqueren und sich unter einem 90°-Winkel kreuzen, während in den Randbereichen der Platten jeweils eine halbe Fuge ausgebildet ist, die sich mit der entsprechenden halben Fuge der benachbarten Platte wieder zu einer ganzen Fuge ergänzt. Andere Geometrien sind möglich, z. B. solche, bei welchen nur in den Randbereichen jeweils eine "halbe Fuge" ausgebildet ist. Der optische Eindruck kann verstärkt werden, wenn beim Bedrucken der Fugenbereich und der dazwischenliegende Bereich unterschiedlich bedruckt werden.

Als trogartige Struktur wird hier allgemein eine entlang einer Geraden verlaufende Struktur verstanden, welche gegenüber einer Oberfläche der Nutzoberfläche zurück versetzt ist und einen trogartigen Querschnitt umfasst, welcher entlang des Verlaufs der Struktur im Wesentlichen konstant ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1A-E: vertikale Querschnitte durch einen erfindungsgemässen Bodenbelag in verschiedenen Stadien der Herstellung;
- Fig. 2: eine schematische Draufsicht auf die Strukturierung des erfindungsgemässen Bodenbelags;
- Fig. 3A: eine Draufsicht auf eine strukturierte Korkplatte für einen erfindungsgemässen Bodenbelag,
- Fig. 3B: einen Querschnitt durch die Nutzschicht der Korkplatte; und
- Fig. 3C: eine Draufsicht auf den aus mehreren Korkplatten aufgebauten Bodenbelag.

Grundsätzlich sind in den Figuren gleiche Teile mit gleichen Bezugszeichen versehen.

### Wege zur Ausführung der Erfindung

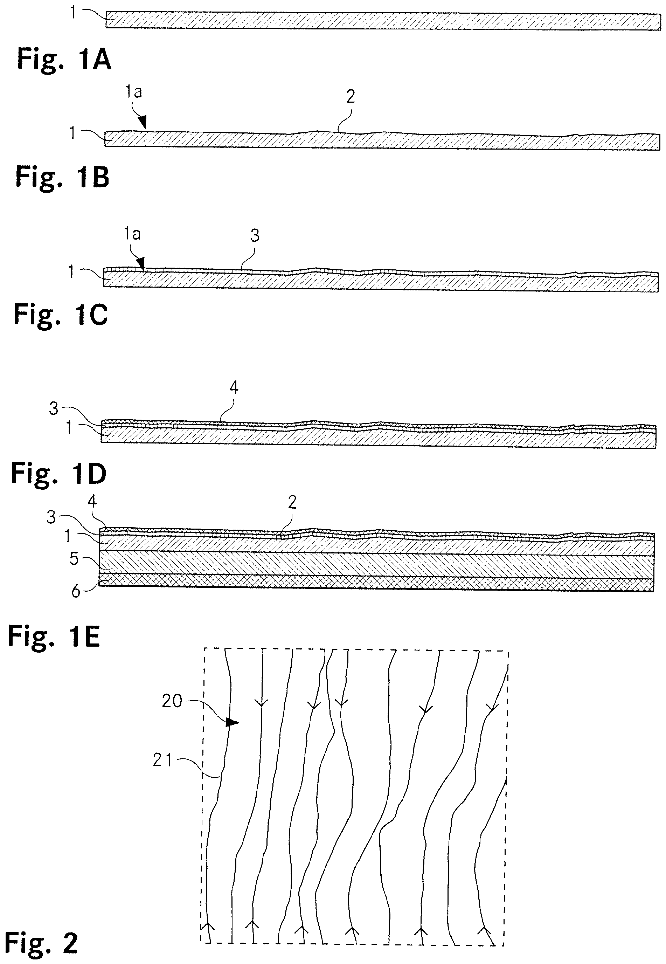

Die Figuren 1A-E zeigen vertikale Querschnitte durch einen erfindungsgemässen Bodenbelag in verschiedenen Stadien der Herstellung. Die Figur 1A zeigt eine Lage 1 aus Kork mit konstanter Dicke, z. B. 3 mm. Verwendet wird insbesondere eine Lage, welche aus Korkgranulat geringer Korngrösse hergestellt worden ist, so dass eine glatte Oberfläche resultiert, die nach der erfindungsgemässen Erzeugung von Oberflächenstrukturen bedruckbar ist und im Wesentlichen die durch die erfolgte Strukturierung erhaltene Oberfläche zeigt, ästhetisch unbeeinflusst von der Körnigkeit des Granulats.

In die obere Hauptfläche 1a der Lage 1 wird nun eine Strukturierung 2 eingebracht (siehe Figur 1B). Dazu wird ein materialabtragendes Verfahren eingesetzt. Insbesondere wird eine CNC-gesteuerte Anlage eingesetzt, mittels welcher eine oder mehrere Schleifscheiben an beliebige Oberflächenpositionen der Lage 1 bewegt werden können und die ein beliebiges Eintauchen der Schleifscheiben in die Lage 1 ermöglichen. Je nach Geometrie der Schleifscheibe kann auch eine Rotation der Schleifscheibe um ein vertikale Achse, gegebenenfalls zusätzlich auch um eine horizontale Achse ermöglicht sein. Mit der Schleifscheibe bzw. den Schleifscheiben kann so eine gewünschte Strukturierung 2 in der Hauptfläche 1a der Lage 1 erzeugt werden. Die Tiefe der Strukturelemente der Strukturierung 2 beträgt im dargestellten Beispiel 0.1 - 0.3 mm. Die Strukturierung bildet beispielsweise die Maserung 20 einer Holzplatte nach, wie dies in der schematischen Draufsicht der Figur 2 gezeigt ist: Mit Hilfe einer Schleifscheibe werden einzelne Vertiefungen 21 entlang der gedachten Maserung 20 erzeugt. Dazu wird die Schleifscheibe am Anfang einer zu erzeugenden Vertiefung in die Lage 1 abgesenkt, dann entlang der vorgegebenen Linie der Maserung 20 bewegt und schliesslich wieder angehoben, bis die Schleifscheibe den Kontakt mit der Lage 1 verliert. Zur Zeitersparnis werden benachbarte Vertiefungen 21 in jeweils gegenläufiger Richtung erzeugt, wie dies durch die Pfeile in Figur 2 angedeutet ist.

Als nächstes wird die strukturierte Hauptfläche 1a der Lage 1 mittels eines Tintenstrahl-Druckverfahrens bedruckt, so dass eine Druckschicht 3 gebildet wird (vgl. Figur 1C). Nach dem Bedrucken und einer vom Druckverfahren und der eingesetzten Tinte abhängigen Trocknungszeit wird eine Schutzschicht 4 auf die Druckschicht 3 aufgebracht, insbesondere ein wasserbasierter Schutzlack mit Acryl- und Polyurethan-Anteilen. Es ergibt sich die in der Figur 1D dargestellte Situation.

Nun wird die Lage 1 mit Druckschicht 3 und Schutzschicht 4 auf eine 9 mm dicke Platte 5 aus HDF geklebt. Anschliessend werden in die Kante Elemente für eine Nut-/FederVerbindung benachbarter Platten in der Art einer so genannten "Klickverbindung" eingefräst. Schliesslich wird eine 1.5 mm dicke Korkunterlage 6 auf die Unterseite der Platte 5 aus HDF aufgeklebt. Sie dient insbesondere zur Trittschalldämmung.

Das fertige Schichtsystem bildet mit Vorteil Platten vorgegebener Grösse, die sich dann dank der Verbindungselemente einfach miteinander zu einem Fussboden verbinden lassen.

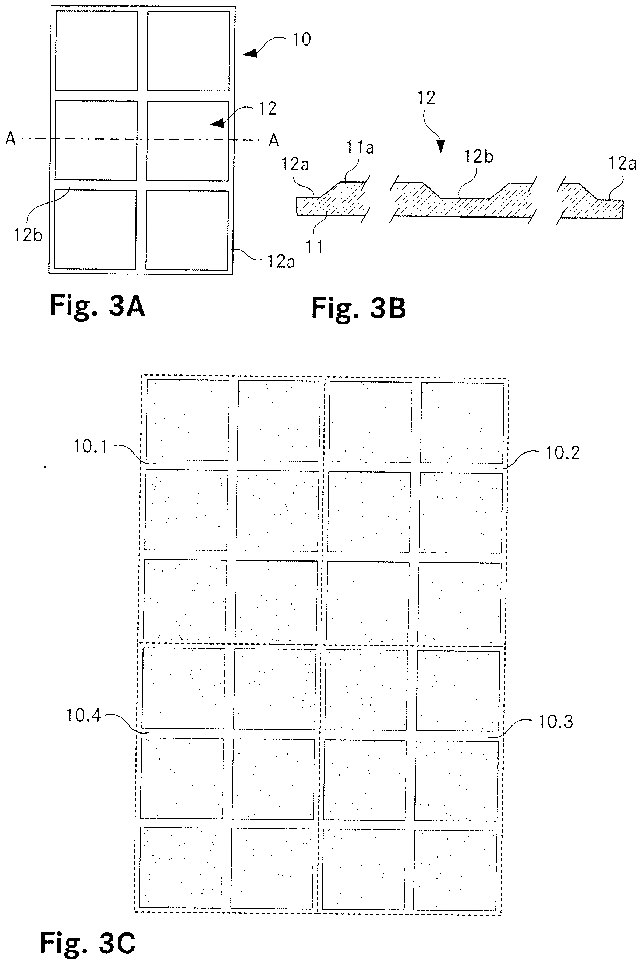

Die Figur 3A zeigt eine Draufsicht auf eine strukturierte Korkplatte für einen erfindungsgemässen Bodenbelag. Die Figur 3B zeigt einen vertikalen Querschnitt durch die Nutzschicht der Korkplatte, entlang der in der Figur 3A angegebenen Linie A-A. Die Figur 3C zeigt eine Draufsicht auf den aus mehreren Korkplatten aufgebauten Bodenbelag.

Die Korkplatte 10 besteht aus einem Schichtsystem, wie es vorstehend im Zusammenhang mit der Figur 1 beschrieben worden ist. Die in die Nutzschicht 11 eingebrachte Strukturierung 12 umfasst eine umlaufende, an den Rand der Korkplatte 10 angrenzende äussere trogartige Vertiefung 12a sowie quer zum entsprechenden Rand verlaufende, sich in einem Winkel von 90° kreuzende innere trogartige Vertiefungen 12b. Die äussere Vertiefung 12a umfasst einen ausgehend von der Hauptfläche 11a der Nutzschicht schräg in die Fläche hineinlaufende Wand sowie einen flachen, sich parallel zur Hauptfläche 11a erstreckenden Grund, der sich bis zum Rand der Korkplatte 10 erstreckt. Die inneren Vertiefungen 12b umfassen einen beidseitig von Wänden eingeschlossenen Grund, der Neigungswinkel der Wände und die Tiefe der äusseren und inneren Vertiefungen 12a, 12b sind gleich, die Breite des Grundes ist bei den inneren Vertiefungen 12b doppelt so gross wie bei den äusseren Vertiefungen 12a. Beim dargestellten Beispiel ist die Korkplatte 10 durch die inneren Vertiefungen 12b in insgesamt sechs quadratische Teilbereiche aufgeteilt. Wie in der Figur 3C dargestellt, wird die Korkplatte 10 anschliessend wie oben beschrieben mit einer Bedruckung versehen. Diese ist so gewählt, dass die quadratischen Teilbereiche mit einem Muster bedruckt sind, während die trogartigen Vertiefungen 12a, 12b eine einheitliche Farbe aufweisen.

Werden nun, wie in der Figur 3C gezeigt, mehrere der Korkplatten 10.1...10.4 unmittelbar aneinander befestigt, ergibt sich eine regelmässige Geometrie mit jeweils gleich grossen trogartigen Vertiefungen zwischen den quadratischen Teilbereichen. Diese Geometrie setzt sich über die Verbindungskanten angrenzender Platten fort. Weil die Fuge zwischen den angrenzenden Platten im Grund der trogartigen äusseren Vertiefungen 12a verläuft, ist sie praktisch nicht sichtbar.

Die Erfindung ist nicht auf die dargestellten Ausführungsbeispiele beschränkt. Insbesondere der Schichtaufbau der Korkplatten und die Geometrie der Strukturierung können unterschiedlich gewählt werden. Es sind zudem vielerlei materialabtragende Verfahren zur Herstellung der Strukturierung einsetzbar, auch in Kombination.

Zusammenfassend ist festzustellen, dass die Erfindung ein Verfahren zur Bearbeitung einer Nutzoberfläche eines Bodenbelags schafft, welches erweiterte Möglichkeiten für die Beeinflussung der optischen Anmutung von Korkböden schafft.

## Patentansprüche

1. Verfahren zur Bearbeitung einer Nutzoberfläche eines Bodenbelags, umfassend folgende Schritte:
a) Einbringen von Strukturen (2) in ein flächiges Korkmaterial (1) durch ein materialbtragendes Verfahren;
b) bedrucken des strukturierten Korkmaterials (1) durch ein Digitaldruckverfahren; und
c) aufbringen einer Schutzschicht (4) auf das bedruckte strukturierte Korkmaterial (1).

2. Verfahren nach Anspruch 1, **dadurch gekennzeichnet, dass** die Strukturen (2) Strukturelemente mit einer Tiefe von 0.05 - 2.0 mm umfassen.

3. Verfahren nach Anspruch 1 oder 2, **dadurch gekennzeichnet, dass** die Strukturen (2) längliche Strukturelemente mit einer Breite von 1 - 30 mm umfassen.

4. Verfahren nach einem der Ansprüche 1 bis 3, **dadurch gekennzeichnet, dass** das materialabtragende Verfahren bereichsweise auf das flächige Korkmaterial (1) einwirkt.

5. Verfahren nach einem der Ansprüche 1 bis 4, **dadurch gekennzeichnet, dass** beim Bedrucken ein auf die eingebrachten Strukturen (2) ausgerichtetes Druckmuster erzeugt wird.

6. Verfahren nach einem der Ansprüche 1 bis 4, **dadurch gekennzeichnet, dass** beim Bedrucken ein von den eingebrachten Strukturen (2) unabhängiges Druckmuster erzeugt wird.

7. Verfahren nach einem der Ansprüche 1 bis 6, **dadurch gekennzeichnet, dass** das materialabtragende Verfahren CNC-gesteuert erfolgt.

8. Verfahren nach einem der Ansprüche 1 bis 7, **dadurch gekennzeichnet, dass** das materialabtragende Verfahren ein Fräs-, Schleif- oder Hobelverfahren ist.

9. Verfahren nach einem der Ansprüche 1 bis 8, **dadurch gekennzeichnet, dass** beim Aufbringen der Schutzschicht (4) oder in einem nachfolgenden Schritt eine Lackschicht aufgebracht und strukturiert wird.

10. Bodenbelag, herstellbar durch ein Verfahren nach einem der Ansprüche 1 bis 9, umfassend
a) eine Nutzoberfläche aus einem flächigen Korkmaterial (1), wobei die Nutzoberfläche mit durch ein materialabtragendes Verfahren erzeugten Strukturen (2) versehen ist;
b) eine auf die strukturierte Nutzoberfläche aufgebrachte Druckschicht (3);
c) eine auf die Druckschicht (3) aufgebrachte Schutzschicht (4).

11. Bodenbelag nach Anspruch 10, **dadurch gekennzeichnet, dass** eine Dicke des flächigen Korkmaterials (1) 1 - 5, bevorzugt 2 - 4 mm, beträgt.

12. Bodenbelag nach Anspruch 10 oder 11, **gekennzeichnet durch** eine formstabile Schicht (5), auf welche die Nutzoberfläche aufgebracht ist.

13. Bodenbelag nach Anspruch 12, **dadurch gekennzeichnet, dass** der Bodenbelag mehrere Platten (10) umfasst, wobei die formstabile Schicht (5) in Randbereichen der Platten (10) miteinander zusammenwirkende Befestigungselemente umfasst.

14. Bodenbelag nach Anspruch 13, **dadurch gekennzeichnet, dass** die Strukturen (2) gerade, längliche, trogartige Strukturen in einer regelmässigen Anordnung umfasst, wobei die Anordnung so gewählt ist, dass die Randbereiche der Platten (10) zumindest teilweise entlang der trogartigen Strukturen verlaufen.

## Claims

1. Method for working a useful surface of a floor covering, comprising the following steps:
a) introducing structures (2) into a planar cork material (1), by way of a material-removing method;
b) printing the structured cork material (1) by way of a digital printing method; and
c) applying a protective layer (4) onto the printed structured cork material (1).

2. Method according to Claim 1, **characterized in that** the structures (2) comprise structural elements having a depth of 0.05 to 2.0 mm.

3. Method according to Claim 1 or 2, **characterized in that** the structures (2) comprise elongate structural elements having a width of 1 to 30 mm.

4. Method according to one of Claims 1 to 3, **characterized in that** the material-removing method acts in regions on the planar cork material (1).

5. Method according to one of Claims 1 to 4, **characterized in that** during printing a printed pattern which is aligned in relation to the introduced structures (2) is generated.

6. Method according to one of Claims 1 to 4, **characterized in that** during printing a printed pattern which is independent of the introduced structures (2) is generated.

7. Method according to one of Claims 1 to 6, **characterized in that** the material-removing method is performed in a CNC-controlled manner.

8. Method according to one of Claims 1 to 7, **characterized in that** the material-removing method is a routing, sanding, or planing method.

9. Method according to one of Claims 1 to 8, **characterized in that** during application of the protective layer (4), or in a subsequent step, a varnish layer is applied and structured.

10. Floor covering, manufacturable by a method according to one of Claims 1 to 9, comprising:
a) a useful surface from a planar cork material (1), wherein the useful surface is provided with structures (2) generated by a material-removing method;
b) a printed layer (3) which is applied onto the structured useful surface;
c) a protective layer (4) which is applied onto the printed layer (3).

11. Floor covering according to Claim 10, **characterized in that** a thickness of the planar cork material (1) is 1 to 5, preferably 2 to 4 mm.

12. Floor covering according to Claim 10 or 11, **characterized by** a dimensionally stable layer (5) onto which the useful surface is applied.

13. Floor covering according to Claim 12, **characterized in that** the floor covering comprises a plurality of boards (10), wherein the dimensionally stable layer (5) in peripheral regions of the boards (10) comprises mutually interacting fastening elements.

14. Floor covering according to Claim 13, **characterized in that** the structures (2) comprise straight, elongate, trough-like structures in a regular arrangement, wherein the arrangement is selected such that the peripheral regions of the boards (10) at least in part run along the trough-like structures.

## Revendications

1. Procédé de traitement d'une surface utile d'un revêtement de sol, comprenant les étapes suivantes:
a) créer des structures (2) dans un matériau de liège plat (1) par un procédé avec enlèvement de matière;
b) imprimer le matériau de liège structuré (1) par un procédé d'impression numérique; et
c) appliquer une couche de protection (4) sur le matériau de liège structuré imprimé (1).

2. Procédé selon la revendication 1, **caractérisé en ce que** les structures (2) comprennent des éléments de structure avec une profondeur de 0,05 à 2,0 mm.

3. Procédé selon la revendication 1 ou 2, **caractérisé en ce que** les structures (2) comprennent des éléments de structure allongés avec une largeur de 1 à 30 mm.

4. Procédé selon l'une quelconque des revendications 1 à 3, **caractérisé en ce que** le procédé avec enlèvement de matière agit localement sur le matériau de liège plat (1).

5. Procédé selon l'une quelconque des revendications 1 à 4, **caractérisé en ce que** l'on produit lors de l'impression un motif imprimé orienté sur les structures créées (2).

6. Procédé selon l'une quelconque des revendications 1 à 4, **caractérisé en ce que** l'on produit lors de l'impression un motif imprimé indépendant des structures créées (2).

7. Procédé selon l'une quelconque des revendications 1 à 6, **caractérisé en ce que** l'on exécute le procédé avec enlèvement de matière sous une commande CNC.

8. Procédé selon l'une quelconque des revendications 1 à 7, **caractérisé en ce que** le procédé avec enlèvement de matière est un procédé de fraisage, de meulage ou de rabotage.

9. Procédé selon l'une quelconque des revendications 1 à 8, **caractérisé en ce que** l'on applique et on structure une couche de laque lors de l'application de la couche de protection (4) ou dans une étape suivante.

10. Revêtement de sol, pouvant être fabriqué par un procédé selon l'une quelconque des revendications 1 à 9, comprenant:
a) une surface utile en un matériau de liège plat (1), dans lequel la surface utile est dotée de structures (2) produites par un procédé avec enlèvement de matière;
b) une couche imprimée (3) appliquée sur la surface utile structurée;
c) une couche de protection (4) appliquée sur la couche imprimée (3).

11. Revêtement de sol selon la revendication 10, **caractérisé en ce qu'**une épaisseur du matériau de liège plat (1) vaut 1 à 5, de préférence 2 à 4 mm.

12. Revêtement de sol selon la revendication 10 ou 11, **caractérisé par** une couche de forme stable (5), sur laquelle la surface utile est appliquée.

13. Revêtement de sol selon la revendication 12, **caractérisé en ce que** le revêtement de sol comprend plusieurs plaques (10), dans lequel la couche de forme stable (5) comprend dans des régions de bord des plaques (10) des éléments de fixation coopérant les uns avec les autres.

14. Revêtement de sol selon la revendication 13, **caractérisé en ce que** les structures (2) comprennent des structures droites, allongées, en forme d'auge, en un agencement régulier, dans lequel l'agencement est choisi de telle manière que les régions de bord des plaques (10) s'étendent au moins en partie le long des structures en forme d'auge.
